# EUROPEAN PATENT APPLICATION

(11) **EP 0 984 296 A2**
(43) Date of publication of application: **08.03.2000**
(21) Application number: 99116800.6
(22) Date of filing: 01.09.1999
(51) Int. Cl.: G01S 7/03

(54) **Multi-channel radar device**

(30) Priority: 02.09.1998 DE 19839998
(71) Applicant: SIEMENS AKTIENGESELLSCHAFT, 80333 München (DE)
(72) Inventor: Käshammer, Hans-Peter, 82377 Penzberg (DE); von Pieverling, Klaus, Dr., 82515 Wolfratshausen (DE)

(57) **Zusammenfassung**

Als Speisequelle für die Hochfrequenzleistung wird ein Gunn-Oszillator (3) mit einem ein Gunnelement (4) als Generatorelement sowie einer Varaktordiode (5) zur Frequenzvariation verwendet. Zum Auskoppeln der Oszillatorleistung auf einzelne Radarkanäle wird konventionell eine über eine Koppelöffnung (32) an den Gunn-Oszillator (3) mittels eines zwischengeschalteten Isolators angekoppelte, verzweigte Struktur von Richtkopplern verwendet. Diese konventionelle Leistungsteilung ist konstruktiv aufwendig und entsprechend teuer. Vorgeschlagen wird eine wesentlich günstigere Leistungsteileranordnung (6), die mindestens zwei parallel angeordnete, an einer ihrer Schmalseiten über eine gemeinsame Zwischenwand unmittelbar aneinandergesetzte Hohlleiter (63) aufweist. Diese Zwischenwand ist in Richtung auf den Gunn-Oszillator (3) als eine messerartig zugespitzte Trennkante (61) ausgebildet und zu dessen Koppelöffnung (32) zentriert angeordnet. Vorzugsweise ist in jeden Hohlleiter (63) eine Detektordiode (22) zum Auskoppeln von Empfangssignalen eingesetzt.

Das Mehrkanal-Radargerät eignet sich insbesondere als Verkehrsradardetektor.

## Description

Die Erfindung bezieht sich auf ein Mehrkanal-Radargerät gemäß dem Oberbegriff des Patentanspruches 1.

Ein bevorzugter Anwendungsfall eines derartigen Mehrkanal-Radargerätes ist die Verwendung als ein Verkehrsradar-Detektor, der im Bereich von Verkehrssignalanlagen zum Messen von Verkehrsströmen anstelle einzelner Sensoren, wie zum Beispiel Induktionsschleifen, eingesetzt wird. In einem solchen Anwendungsfall eines Mehrkanal-Radargerätes ist es insbesondere von Bedeutung, dieses Produkt trotz Witterungseinflüssen funktionssicher zu gestalten. Der dafür notwendige technische Aufwand darf dennoch nicht zu hoch sein, um ein solches Produkt im Vergleich zu anderen in der Verkehrstechnik üblichen Sensoren zum Erfassen von Verkehrsströmen wettbewerbsfähig zu halten.

Unter diesen hier angedeuteten Randbedingungen kommt als eine kostengünstige Energiequelle für ein solches Mehrkanal-Radargerät ein Gunn-Oszillator in Betracht, der beispielsweise in "Handbuch für Hochfrequenz- und Elektrotechnik", Herausgeber Curt Rint, Alfred Hüthig, Verlag Heidelberg, 1981, Band 5, Seiten 342ff. im Kapitel "Gunn-Elemente", beschrieben ist. Der daraus bekannte Gunn-Oszillator ist an sich ein relativ einfaches Gebilde. Ein Hohlleiter wird an seinen Stirnwänden, frequenzmäßig abgestimmt, abgeschlossen und in seinem Inneren unter Beachtung der λn/2-Bedingung ein Gunn-Element angeordnet. Dieses Gebilde ergibt somit einen Hohlleiterresonator mit einem Hochfrequenzausgang in einer seiner Stirnseiten.

Im vorliegenden Falle ist die vom Gunn-Oszillator gelieferte Hochfrequenzleistung auf die einzelnen Mikrowellenkanäle des Mehrkanal-Radargerätes entkoppelt aufzuteilen. Eine derartige entkoppelte Leistungsteilung im Mikrowellenbereich wird üblicherweise mittels Richtkopplern erzielt. Ein Richtkoppler arbeitet jedoch nur dann einwandfrei, wenn die speisende Quelle ordnungsgemäß angepaßt ist. Um dies zu erreichen, wird zwischen dem speisenden Gunn-Oszillator und dem nachgeschalteten Richtkoppler ein Isolator eingesetzt. Mit einem herkömmlichen 3dB-Richtkoppler ist eine Leistungsaufteilung auf zwei entkoppelte Kanäle möglich. Wenn nun beispielsweise bei einem Mehrkanal-Radargerät vier entkoppelte Radarkanäle realisiert werden sollen, so benötigt man für diese Verzweigung in einer ersten Stufe einen ersten Richtkoppler und an diesen angeschlossen zwei weitere Richtkoppler. In diesem Falle sind also bereits drei Richtkoppler vorzusehen, um die von dem Gunn-Oszillator erzeugte Hochfrequenzleistung auf diese vier Radarkanäle aufzuteilen. Der Bauteileaufwand für eine derartige Leistungsteilung ist somit erheblich und kostenintensiv. Dieser Aufwand ist bei einem Mehrkanal-Radargerät, das einem Allgebrauchszweck dienen soll, nicht mehr zu rechtfertigen.

Der vorliegenden Erfindung liegt daher die Aufgabe zugrunde, für ein Mehrkanal-Radargerät der eingangs genannten Art eine Leistungsteiler-Anordnung zu schaffen, mit der es möglich ist, die von einem Gunn-Oszillator abgegebene Hochfrequenzleistung auf einfache Weise unter Verwendung kostengünstiger Bauteile auf eine Mehrzahl von zueinander entkoppelten Radarkanälen aufzuteilen.

Bei einem Mehrkanal-Radargerät der eingangs genannten Art wird diese Aufgabe erfindungsgemäß durch die im Kennzeichen des Patentanspruches 1 definierten Merkmale gelöst.

Die erfindungsgemäße Lösung geht von der Überlegung aus, daß bei einem Gunn-Oszillator, dessen Hohlraum durch zwei, jeweils eine Kurzschlußebene bildende Stirnwände abgeschlossen ist, eine Öffnung in einer dieser Stirnwände zum Auskoppeln der Hochfrequenzleistung benutzt wird. Theoretisch kann diese an sich beliebig klein sein. Im praktischen Fall kann man eine derartige Koppelöffnung, sei sie als Schlitz oder als Loch ausgebildet, immer noch so dimensionieren, daß sie geteilt werden kann. Eine derartige Teilung der Koppelöffnung sollte physikalisch keine Störung im Ausbreitungsverhalten der Mikrowellen verursachen.

Wie empirische Untersuchungen gezeigt haben, ist es ausgehend von dieser Überlegung tatsächlich möglich, den Gunn-Oszillator über einen entsprechend gestalteten Hochfrequenzausgang mit einer Leistungsteileranordnung zu koppeln, die in ihrer Funktion einer der Anzahl der individuellen Radarkanäle entsprechenden Anzahl von konventionellen Richtkopplern entspricht. Die Hochfrequenzleistung des Gunn-Oszillators wird im wesentlichen ungestört auf die voneinander entkoppelten Radarkanäle aufgeteilt. Für die über die jeweilige Radarantenne eingespeisten Empfangssignale ist dagegen die Kopplung zwischen dem jeweiligen Kanal der Leistungsteileranordnung und dem Gunn-Oszillator nicht angepaßt. Die entgegen der Ausbreitungsrichtung der Sendesignale in die jeweiligen Radarkanäle eingespeisten Empfangssignale bleiben daher im wesentlichen ohne Rückwirkung auf die Wellenausbreitung im Hohlleiterresonator des Gunn-Oszillators. Mit der erfindungsgemäßen Lösung ist damit eine technologisch relativ einfache, im Vergleich zu konventionellen Lösungen für eine Leistungsteilung vor allem kostengünstige Ausführungsform für eine Leistungsteileranordnung geschaffen, die auch physikalisch mit befriedigendem Wirkungsgrad beherrschbar ist.

Wie Weiterbildungen der erfindungsgemäßen Lösung zeigen, die in Unteransprüchen beschrieben sind, läßt sich diese Lösung für eine Leistungsteilung auf eine Mehrzahl von voneinander entkoppelten Radarkanälen mit einfachen Mitteln erstrecken. Weil bekanntlich Leitungsanordnungen in Hohlleitertechnik für den Mikrowellenbereich doch ein beachtliches Bauvolumen haben, ist es dabei auch von Bedeutung, daß sich diese erfindungsgemäß ausgebildeten Bauformen in einer sehr kompakten konstruktiven Ausgestaltung realisieren lassen, was sich für die praktische Anwendung als sehr vorteilhaft erweist.

In weiterer Ausgestaltung der Erfindung ist es möglich, in die Hohlleiter der einzelnen Radarkanäle der Leistungsteileranordnung Detektordioden als Elemente zum Auskoppeln der über die Radarantennen eingespeisten Empfangssignale zu integrieren. In dieser weiterführenden Ausgestaltung übernehmen die Hohlleiter der einzelnen Radarkanäle zusätzlich die Funktion eines konventionellen Durchflußmischers. Dies reduziert nochmals einen Bauteileaufwand und das Bauvolumen. Weitere Vorteile der Erfindung sind in einer nachfolgenden Beschreibung im einzelnen dargelegt.

Ausführungsbeispiele der Erfindung werden im folgenden anhand der Zeichnung näher erläutert. Dabei zeigt:
Figur 1 ein Ausbreitungsschema eines Mehrkanal-Radargerätes, hier bei einem Einsatz als Verkehrsradar-Detektor,
Figur 2 ein Blockschaltbild für ein Mehrkanal-Radargerät,
Figur 3 und 4 in je einer Ansicht den Aufbau eines Gunn-Oszillators als speisende Energiequelle für das Mehrkanal-Radargerät und
Figur 5 und 6 in je einer Ansicht die Ausgestaltung einer an den Gunn-Oszillator angeschlossenen Leistungsteileranordnung, die die Hochfrequenzleistung dieser Speisequelle entkoppelt auf die einzelnen Radarkanäle verteilt.

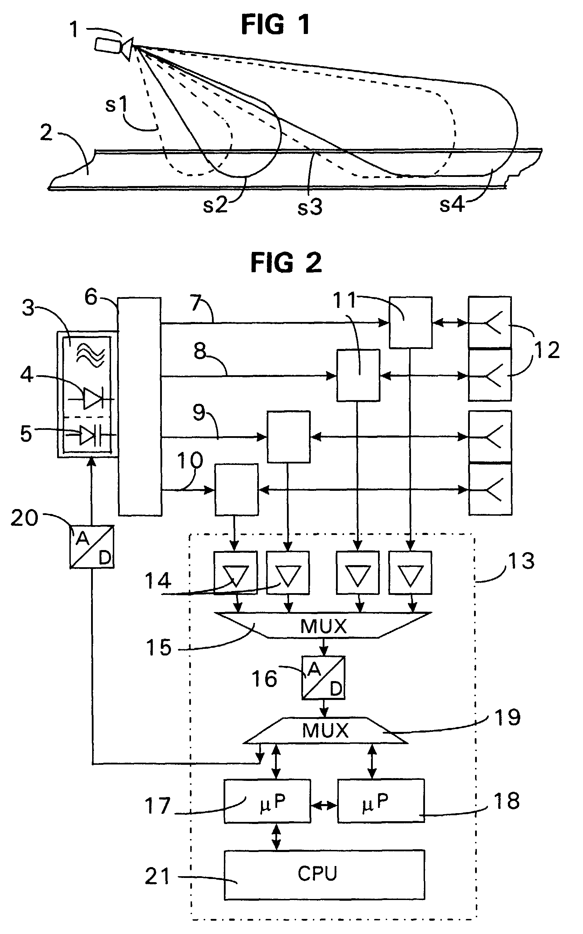

In Figur 1 ist schematisch ein Mehrkanal-Radargerät, hier eingesetzt als ein Verkehrsradar-Detektor 1, dargestellt, das über einem Verkehrsweg 2 angeordnet ist. Der Verkehrsradar-Detektor 1 soll den Strom der diesen Verkehrsweg 2 benutzenden Fahrzeuge sowohl in einem Nahbereich als auch in einem Fernbereich mehrfach erfassen. Der Nahbereich möge dabei beispielhaft bis zu einer Entfernung von etwa 25 m vom Verkehrsradar-Detektor 1 erstreckt sein, der Fernbereich kann in einer Größenordnung von 100 m Abstand zum Verkehrsradar-Detektor 1 liegen. Im Beispiel weise der Verkehrsradar-Detektor 1 vier Radarkanäle auf, deren in Figur 1 schematisch angegebene Strahlungscharakteristiken mit sl bis s4 bezeichnet ist. Mit je einem Paar von Radarstrahlen tastet somit der Verkehrsradar-Detektor 1 einen vorbestimmten Nahbereich bzw. einen Fernbereich ab.

In Figur 2 ist in einem Blockschaltbild der prinzipielle Aufbau dieses Verkehrsradar-Detektors 1 schematisch dargestellt. Als hochfrequente Speisequelle dient dabei ein Hohlleiter-Resonator, der als Gunn-Oszillator 3 ausgebildet ist. Dabei handelt es sich also um einen Hohlleiter-Resonator, der über ein schematisch angedeutetes Gunn-Element 4 angeregt wird, und dessen Frequenz in diesem Beispiel mittels einer Varaktor-Diode abgestimmt wird. Derartige Gunn-Oszillatoren sind als solche bekannt, daher bedarf es hier zunächst keiner weiteren, ins einzelne gehenden Erläuterung.

Die vom Gunn-Oszillator 3 gelieferte HF-Leistung wird mittels einer an den Gunn-Oszillator 3 elektromagnetisch angekoppelten Leistungsteileranordnung 6 auf einzelne Radarkanäle 7 bis 10 verteilt. Konventionell besteht eine solche Leistungsteileranordnung aus einer baumförmigen Struktur von hintereinandergeschalteten Richtkopplern, die mittels eines Isolators an den Gunn-Oszillator 3 angekoppelt ist. Wie die Leistungsteileranordnung 6 im vorliegenden Falle ausgebildet ist, wird noch zu erläutern sein. In den Radarkanälen 7 bis 10 ist jeweils ein Durchflußmischer 11 vorgesehen, der seinerseits jeweils an eine Radarantenne 12 angeschlossen ist.

Die Durchflußmischer 11 entnehmen einen Bruchteil der Sendeenergie als LO-Signale für den Empfangsweg. Das Sendesignal fließt im jeweiligen Radarkanal 7,8,9 bzw. 10 durch den jeweiligen Durchflußmischer 11 hindurch und wird über die zugeordnete Radarantenne 12 abgestrahlt. Ein Empfangssignal dagegen wird über die jeweilige Radarantenne 12 aufgenommen, im Durchflußmischer 11 auf die Basisbandfrequenz heruntergemischt und einer Signalverarbeitungseinheit 13 zugeführt.

Diese Signalverarbeitungseinheit 13 besitzt pro Empfangskanal jeweils einen Eingangsverstärker 14. Die Ausgangssignale der Eingangsverstärker 14 werden im Zeitmultiplex verarbeitet, dazu ist an den Eingangsverstärker 14 ein erster Multiplexer 15 angeschlossen. Über den ersten Multiplexer 15 werden die Empfangssignale im Zeitmultiplex einem Analog-Digital-Wandler 16 zugeführt und dort digitalisiert. Die Weiterverarbeitung der digitalisierten Empfangssignale erfolgt mittels zweier Signalprozessoren 17 bzw. 18 in einer "Master-Slave" - Konfiguration. Um dies zu ermöglichen, ist zwischen dem Analog-Digital-Wandler 16 und die beiden miteinander gekoppelten Signalprozessoren 17 bzw. 18 ein zweiter Multiplexer 19 geschaltet. An einen Ausgang dieses zweiten Multiplexers 19 ist auch ein Digital-Analog-Wandler 20 angeschlossen, über den der Varaktordiode 5 des Gunn-Oszillators 3 Steuersignale zur Frequenzvariation des Gunn-Oszillators 3 zugeführt werden. Schließlich werden die aufbereiteten Empfangssignale von dem als "Master" wirkenden ersten Signalprozessor 17 einem Kommunikationsprozessor 21 zugeführt. Wie die von einem Mehrkanal-Radargerät über einzelne Kanäle empfangenen Empfangssignale aufbereitet werden, ist an sich bekannt und im vorliegenden Falle auch von lediglich untergeordneter Bedeutung. Deshalb dient die vorstehende Beschreibung lediglich dem allgemeinen Verständnis zur Funktion eines Mehrkanal-Radargerätes und bedarf daher keiner weiteren Erläuterung im einzelnen.

Im folgenden wird auf die Ausgestaltung des Gunn-Oszillators 3, seiner Ankopplung an die Leistungsteileranordnung 6 und deren Aufbau selbst näher eingegangen.

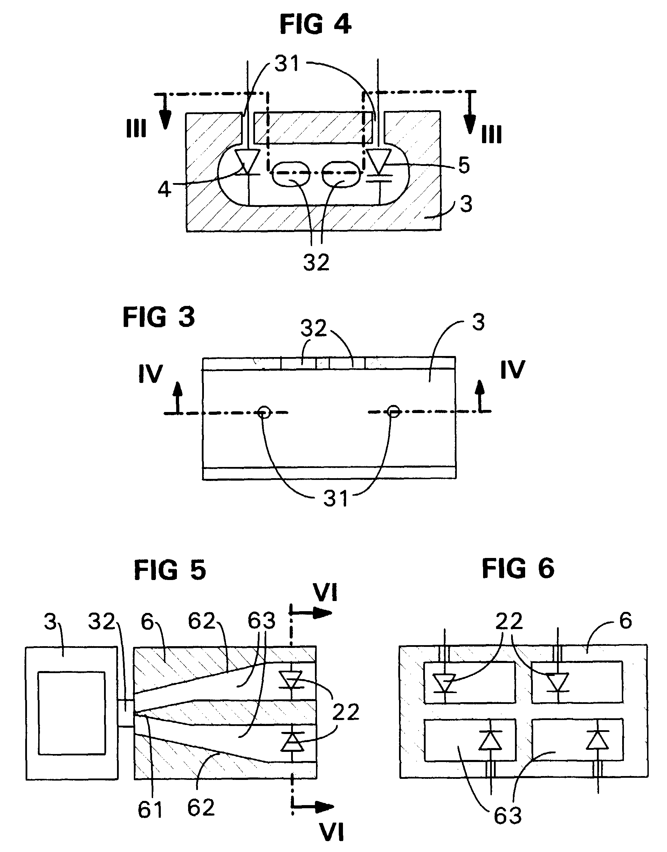

In den Figuren 3 und 4 ist in einer Draufsicht bzw. einem Querschnitt der Gunn-Oszillator 3 schematisch dargestellt. Wie daraus ersichtlich, ist der Gunn-Oszillator 3 an sich durchaus konventionell aufgebaut. Seine beiden, ihn im jeweiligen Betriebsmodus steuernden Elemente, das Gunn-Element 4 als Leistungselement bzw. die Varaktordiode 5 als das die Frequenzvariation steuernde Element, sind in seinem hohlen Innenraum jeweils kathodenseitig galvanisch leitend angeschlossen. Ihre Steuerelektroden sind jeweils durch eine Zuführungsöffnung 31 hindurchgeführt. Weitere Einzelheiten zu Aufbau und Anordnung dieser steuernden Elemente sind in Figur 3 bzw. 4 nicht dargestellt, da sie an sich bekannt bzw. den Erläuterungen zur Figur 2 zu entnehmen sind.

Jedoch ist in den Figuren 3 und 4 angedeutet, daß in eine der Stirnwände des Gunn-Oszillators 3 zwei nebeneinanderliegende Durchgangsöffnungen eingelassen sind, die als Koppelöffnungen 32 dienen, das heißt den HF-Ausgang des Gunn-Oszillators 3 bilden.

In Figur 5 ist nun dargestellt, wie der Gunn-oszillator 3 mechanisch an die Leistungsteileranordnung 6 angekoppelt ist. In einer dem Gunn-Oszillator 3 zugekehrten Stirnfläche weist die Leistungsteileranordnung 6 eine messerartig ausgebildete Trennkante 61 auf, die in bezug auf die Mittelebene der Koppelöffnungen 32 zentriert ist. Zu beiden Seiten dieser Trennkante 61 liegende Innenwände 62 der Leistungsteileranordnung 6 sind sich in Richtung auf die Stirnwand des Gunn-Oszillators 3 konisch verjüngend ausgebildet. In der vom Gunn-Oszillator 3 weg weisenden Richtung bilden die Innenwände 62 in Verbindung mit der Trennkante 61 somit sich nach innen zu Hohlleitern 63 verbreiternde Kanäle.

Wie Figur 6 in einer Querschnittsdarstellung der Leistungsteileranordnung 6 zeigt, sind je Koppelöffnung 32 des Gunn-Oszillators 3 somit zwei übereinanderliegende Hohlleiter 63 gebildet. Insgesamt werden somit über den HF-Ausgang des Gunn-Oszillators 3 vier voneinander entkoppelte Hohlleiter gespeist, die paarweise nebeneinander - bzw. übereinanderstehend - in einem geschlossenen Block angeordnet sind.

Figur 5 und 6 zeigen weiterhin, daß in diesen Hohlleitern 63 der Leistungsteileranordnung 6 jeweils eine Detektordiode 22 angeordnet ist. Jeder Hohlleiter 63 der Leistungsteileranordnung 6 übernimmt damit zugleich die Funktion eines herkömmlich als eine getrennte Baueinheit ausgeführten Durchflußmischers, wie er anhand von Figur 2 beschrieben wurde. Lediglich der Vollständigkeit halber sei hinzugefügt, daß damit die vom Gunn-Oszillator 3 abgewandte Stirnfläche der Leistungsteileranordnung 6 über eine entsprechende Hohlleiterverbindung unmittelbar an die zugeordnete Radarantenne 12 des jeweiligen Radarkanales angeschlossen ist.

## Patentansprüche

1. Mehrkanal-Radargerät mit einem Gunn-Oszillator (3), gebildet aus einem abgeschlossenen Hohlleiterresonator, in dem ein Gunnelement (4) sowie eine Varaktordiode (5) angeordnet sind und mit einer zum Auskoppeln der Oszillatorleistung auf einzelne Radarkanäle bestimmten Leistungsteileranordnung (6), die eingangsseitig über eine Koppelöffnung (32) an den Hohlleiterresonator elektromagnetisch angekoppelt ist und je Radarkanal mit einer Radarantenne (12) über einen Durchflußmischer (11) verbunden ist, über den ein reflektiertes Empfangssignal an eine Einrichtung (13) zum Verarbeiten von Empfangssignalen auszukoppeln ist, **dadurch gekennzeichnet,** daß die Leistungsteileranordnung zwei parallel angeordnete, an einer ihrer Schmalseiten unmittelbar aneinandergesetzte Hohlleiter (63) aufweist, wobei deren so gebildete gemeinsame Zwischenwand (61) in Richtung auf den Gunn-Oszillator (3) messerartig zugespitzt ausgebildet und zu dessen Koppelöffnung (32) zentriert angeordnet ist.

2. Mehrkanal-Radargerät nach Anspruch 1, **dadurch gekennzeichnet,** daß die lichten Weiten der Leistungsteileranordnung (6), bezogen auf die Breitseiten der parallel zueinander angeordneten Hohlleiter (63), in Richtung auf die Koppelöffnung (32) konisch verjüngt ausgebildet sind.

3. Mehrkanal-Radargerät nach Anspruch 1 oder 2, **dadurch gekennzeichnet,** daß der Gunn-Oszillator (3)zusätzlich zu der ersten Koppelöffnung (32) in einer seiner Stirnwände eine weitere Koppelöffnung aufweist und daß die Leistungsteileranordnung (6), dieser zweiten Koppelöffnung zugeordnet, ein weiteres Paar von Hohlleitern (63) besitzt.

4. Mehrkanal-Radargerät nach Anspruch 3, **dadurch gekennzeichnet,** daß die Hohlleiter (63) der Leistungsteileranordnung (6) paarweise im Querschnitt neben- bzw. übereinander unter Bildung von gemeinsamen Zwischenwänden angeordnet sind.

5. Mehrkanal-Radargerät nach einem der Ansprüche 1 bis 4, **dadurch gekennzeichnet,** daß in den Hohlleitern (63) der Leistungsteileranordnung (6) je eine Detektordiode (22) angeordnet ist, womit jeder Hohlleiter der Leistungsteileranordnung zugleich einen Durchflußmischer zum Auskoppeln des in die zugeordnete Radarantenne (12) reflektierten Empfangssignales in die Einrichtung (13) zum Verarbeiten der Empfangssignale bildet.

6. Mehrkanal-Radargerät nach einem der Ansprüche 1 bis 5, **gekennzeichnet durch** seine Verwendung als ein Verkehrsradardetektor mit je zwei Radarkanälen zur Detektion von Fahrzeugen in einem Fern- beziehungsweise einem Nahbereich.
